# EUROPÄISCHE PATENTSCHRIFT

(11) **EP 1 092 577 B1**
(45) Veröffentlichungstag und Bekanntmachung des Hinweises auf die Patenterteilung: **14.01.2004**
(21) Anmeldenummer: 00118068.6
(22) Anmeldetag: 23.08.2000
(51) Int. Cl.: B60J 7/12

(54) **Klapp- bzw. Faltverdeck für Fahrzeuge wie Cabriolets od. dgl.**
Tiltable or foldable soft top for vehicles, such as convertibles or similar
Toit escamotable ou pliant pour véhicules comme cabriolet ou similaires

(30) Priorität: 15.10.1999 DE 19949865
(43) Veröffentlichungstag der Anmeldung: 18.04.2001
(73) Patentinhaber: PARAT Automotive, Schönenbach GmbH + Co. KG, 42897 Remscheid (DE)
(72) Erfinder: Windpassinger, Martin, 94051 Hauzenberg (DE); Kasparak, Manfred, 94089 Neureichenau (DE)
(74) Vertreter: Patentanwälte Ostriga & Sonnet

(56) Entgegenhaltungen:
- EP-A- 0 806 313
- DE-U- 29 718 206
- PATENT ABSTRACTS OF JAPAN vol. 1997, no. 08, 29. August 1997 (1997-08-29) & JP 09 109306 A (PAJIERO SEIZO KK), 28. April 1997 (1997-04-28)

## Beschreibung

Die Erfindung bezieht sich auf ein Klapp- bzw. Faltverdeck für Fahrzeuge entsprechend dem Oberbegriff des unabhängigen Anspruchs.

Ein derartiges Verdeck ist beispielsweise aus DE 38 29 345 C2 bekannt. Um zu erreichen, dass das Verdeck einen runden Formverlauf ohne Einfallstellen aufweist, sind örtlich angeordnete Luftkissen an der Innenseite des Verdeckbezugs oder unter einer aus Faservlies oder Gummihaargewebe bestehenden mattenartigen Dämmschicht über den Spanngurten angeordnet. Die Luftkissen sind pneumatisch ansteuerbar, und es ist insbesondere daran gedacht, sie beim Schließen des Verdecks selbsttätig aufzublasen und beim Öffnen zu evakuieren. Es versteht sich von selbst, dass allein schon das Vorsehen von Luftkissen, deren Fertigung und Anbringung aufwendig sind; ebenfalls komplex gestalten sich die Maßnahmen zu ihrer pneumatischen Ansteuerung.

Aus DE 297 18 206 U ist ein Verdeck bekannt, bei dem unter der Außenlage des Verdeckstoffs eine zwischen Hüllenlagen eingeschlossene Dämmlage angeordnet ist. Zur Festlegung des Verdecks am Spriegel sind flexible Fahnen vorgesehen, die einenends die Dämmlage durchgreifen und an der Außenlage befestigt und andernends am Spriegel gehalten sind. Hierdurch soll während schneller Fahrt ein Abheben des Verdecks vom Spriegel vermieden werden.

Ausgehend von DE 38 29 345 C2 liegt der vorliegenden Erfindung in erster Linie die Aufgabe zugrunde, ein Verdeck mit möglichst glatter Oberfläche und optisch geschmeidigem Erscheinungsbild zu schaffen, bei dem die dies erreichenden Maßnahmen gegenüber dem Stand der Technik erheblich vereinfacht sind.

Die Erfindung löst diese Aufgabe durch die Merkmale des Anspruchs 1 und ist dadurch gekennzeichnet, dass die Spanngurte auf ihren dem Außenbezug zugekehrten Flächen zumindest im Querungsbereich der Spriegel mit einer unmittelbar an den Gurten haftenden Polsterschicht ausgerüstet sind.

Im Unterschied zum Stand der Technik wird also eine Polsterung unmittelbar den Spanngurten zugeordnet. Dies hat Vorteile in mehrfacher Hinsicht. Zunächst lassen sich die Spanngurte sehr viel einfacher polstern als ein ganzes Verdeck mittels aufblasbarer Luftkissen. Die gepolsterten Spanngurte lassen sich auf die gleiche Art verbauen wie herkömmliche einfache Gurte. Durch das Überspannen der Spriegel mit gepolsterten Spanngurten - über denen der Außenbezug liegt - werden Einfallstellen innerhalb des Verdecks vermieden. Vor allem wird ein Abzeichnen der Spriegel durch den Verdeckstoff hindurch vermieden, was insbesondere im Bereich des Eckspriegels, der die C-Säule eines Cabrio-Verdecks definiert und über den das Verdeckstoff am straffsten gespannt ist, von erheblicher Bedeutung ist und bislang mit einfachen Mitteln nicht erreicht werden konnte.

Rüstet man die Spanngurte im wesentlichen über ihre gesamte Länge hinweg mit einer Polsterung aus, ergibt sich als weiterer Vorteil eine Dämmung der Geräusche beim unvermeidlichen Flattern, d.h. einem Aneinanderschlagen der Spanngurte und des Verdeckstoffs während der Fahrt.

In besonders vorteilhafter Weiterbildung ist vorgesehen, daß die Polsterschicht auf die Spanngurte als Gießharzschicht aus einem schäumbaren Kunststoff aufgegossen ist, welche nach dem Ausschäumen mit dem Spanngurt eine feste Verbindung eingeht. Vorzugsweise ist die Gießharzschicht aus einem unter Hochdruck aufgegossenen Kunststoff, insbesondere einem Zweikomponenten-Kunststoff auf insbesondere PUR-Basis gebildet, der - als im Rahmen der Erfindung erprobtes Beispiel - eine Härte von etwa 40 Shore D und ein Mischungsverhältnis des Zwei-Komponenten-Kunststoffs von Polyol:Isocyanat von etwa 100:38 Gewichtsanteilen aufweisen kann.

Prinzipiell mit demselben Material läßt sich in der gleichen Weise auch die Innenseite des Außenbezugs ausrüsten. In diesem Fall erfüllt die Gießharzschicht in erster Linie die Aufgabe einer Wärme- und Schallisolierung, wenngleich sie auch in den Polstereffekt mit einbezogen werden kann.

Die Schichtdicke der Gießharzschicht auf den Spanngurten und/oder unter dem Außenbezug kann je nach den an sie gestellten Forderungen etwa im Bereich von 2 bis 8 mm liegen.

Durch gezielte Anordnung von Schwächungszonen oder Unterbrechungen der Gießharzschicht können auf einfache Weise Sollfaltoder -knickzonen in die Spanngurte und/oder den Verdeckbezug eingearbeitet werden, die ein reproduzierbar kontrolliertes und sauberes Ablegen des Verdecks gewährleisten.

Weitere vorteilhafte und zweckmäßige Ausgestaltungen sind Gegenstand der Unteransprüche. Sie ergeben sich auch aus der nachfolgenden Beschreibung der Erfindung anhand von in den Zeichnungen dargestellter Ausführungsbeispiele. Es zeigen:
- Fig. 1: eine schematische, schaubildliche Ansicht eines als Klappverdeck ausgebildeten Fahrzeugverdecks,
- Fig. 2: einen Teil-Querschnitt durch äußeren Verdeckbezug, Spriegel und Spanngurt in einem seitlichen Verdeckbereich,
- Fig. 3: einen Schnitt wie Fig. 2, jedoch ein zweites Ausführungsbeispiel betreffend,
- Fig. 4: einen Querschnitt entsprechend der Schnittlinie IV-IV in Fig. 2, jedoch zusätzlich mit einem Innenbezug (Himmel),
- Fig. 5: eine Schnittdarstellung zur Veranschaulichung einer Soll-Knick- bzw. Soll-Faltzone und
- Fig.6: eine schaubildliche Darstellung dieser Zone im Bereich eines Spanngurtes.

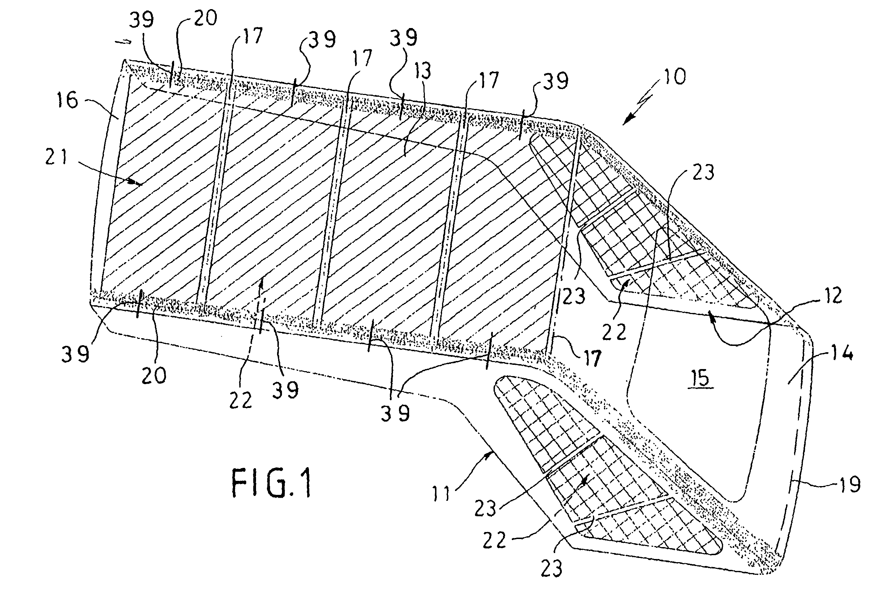

Fig. 1 veranschaulicht am Beispiel eines Klappverdecks für Cabriolets ein geschlossenes Fahrzeugverdeck 10. Es umfaßt die beiden Seitenteile 11 und 12, ein Dachteil 13 und ein Heckteil 14 mit einer darin eingearbeiteten Scheibe 15. Mit 16 ist der dem Frontscheibenrahmen zugeordnete Windlaufspriegel bezeichnet. Die Bezugsziffern 17 weisen auf quer zur Fahrzeuglängsachse gerichtete Spriegel hin, von denen der hinterste der sog. Eckspriegel ist, der den im wesentlichen oberen horizontalen Verdeckabschnitt in den rückwärtigen Verdeckabschnitt 15 umleitet. 19 bezeichnet schließlich den sogenannten Spannbügel, der beim Schließen des Verdecks zuletzt am Fahrzeugaufbau verriegelt wird. Sodann, und für vorliegende Erfindung von besonderem Interesse, verfügt ein Verdeck üblicherweise über sich randnah des Verdecks und in Fahrzeuglängsrichtung erstreckende, unter dem äußeren Verdeckbezug und über den Spriegeln 17 verlaufende Spanngurte 20.

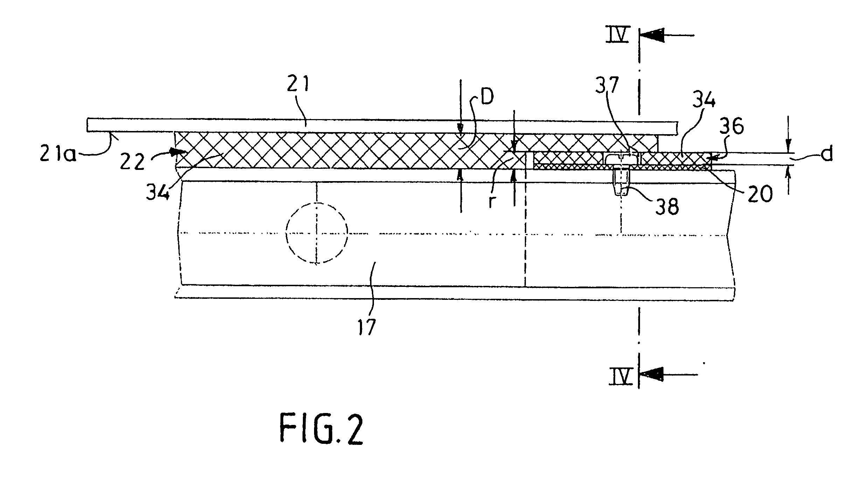

Der Querschnitt in Fig. 2 zeigt einen rohrförmigen Spriegel 17, der vom Außenbezug 21 und, nahe den Längskanten des Verdecks 10, von je einem Spanngurt 20 übergriffen ist. Der Spanngurt 20 ist auf seiner dem Außenbezug 21 zugekehrten Oberfläche mit einer Polsterung 36 versehen, die als Gießharzschicht 34 auf die Oberfläche des Spanngurtes 20 aufgegossen ist. Die Kunststoffmasse verbindet sich beim Aufschäumen formschlüssig mit dem Gurtgewebe.

Wie weiter aus Fig. 2 erkennbar ist, weist die Polsterung Durchgriffsöffnungen 37 - vorzugsweise in Form von toleranzausgleichsfähigen Langlöchern - auf, durch die hindurch der Spanngurt 20 mit Hilfe von Schrauben 38 am Spriegel 17 befestigt wird.

Im Anordnungs- bzw. Verlaufsbereich des Spanngurtes 20 ist die auf die Unterfläche 21a des Außenbezugs 21 als Dämmschicht 22 aufgegossene Gießharzschicht 34 in ihrer ursprünglichen Schichtdicke D von beispielsweise 6 bis 8 mm um das Maß r reduziert. Dieses Maß r entspricht der Dicke des Spanngurtes 20 zuzüglich der Dicke d der auf seiner Oberfläche aufgebrachten Gießharzschicht 34. Im Überdeckungsbereich der Gießharzschichten 34 der verdeckbezugseitigen Dämmung 22 und der Gurtpolsterung 36 liegt somit gewissermaßen ein Doppelpolster vor.

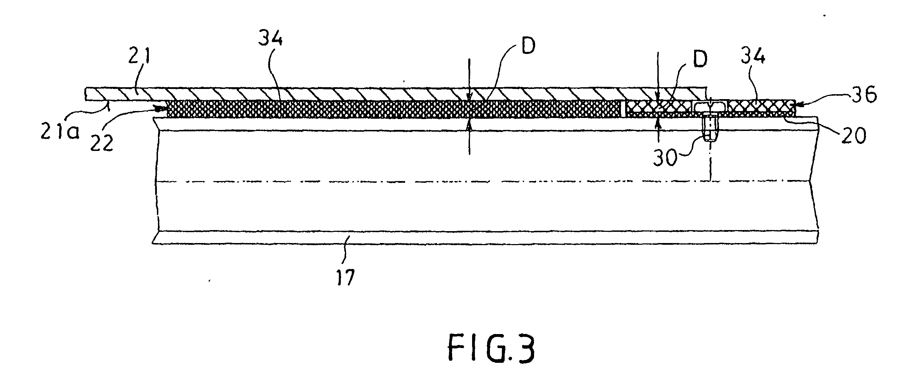

Im Rahmen der Erfindung genügt es zu den angestrebten Zielen auch, wenn nur der Verdeckbezug 21, also der Stoff ohne Dämmung 22, den gepolsterten Spanngurt 20 glatt überdeckt, wie dies das in Fig. 3 dargestellte Ausführungsbeispiel zeigt. Dort ist im Überlappungsbereich von Verdeckbezug 21 und Spanngurt 20 die Unterseite des Verdeckstoffes nicht mit der Dämmschicht ausgerüstet. Sofern außerhalb der Gurtüberdeckung der äußere Verdeckbezug mit einer Dämmung 22 versehen ist (Fig. 3), so ist es vorteilhaft, wenn die Gesamtdicke D von Spanngurt 20 und seiner Polsterung 36 mit der Dicke D der Dämmschicht 22 in etwa übereinstimmt.

Es sei darauf hingewiesen, daß eine Dämmschicht 22 auf der Innenseite des äußeren Verdeckbezugs 21 einer Lösung des der Erfindung zugrundeliegenden Problems förderlich ist; das zeigen die Fig. 2 und 3 recht anschaulich. Aber ein gepolsterter Gurt 20 erfüllt auch dann bereits seinen Zweck, das Abzeichnen des Spriegels auf der Außenseite des Verdeckbezugs zu vermeiden, wenn der Stoff des äußeren Verdeckbezugs 21 zwischen den Spanngurten 20 (also quer zur Fahrzeuglängsachse) frei gespannt ist.

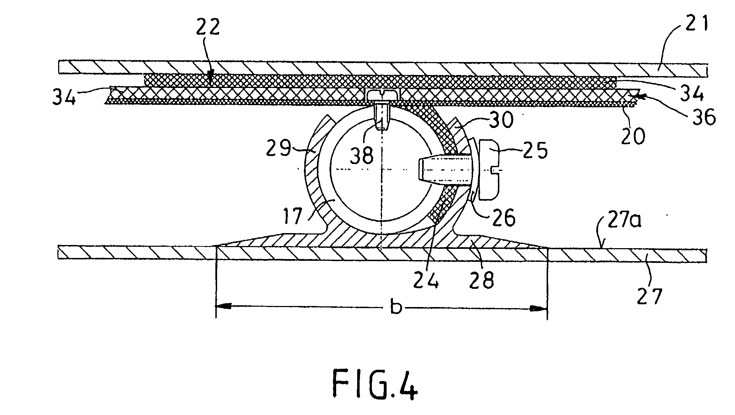

Fig. 4 zeigt einen Querschnitt im Bereich eines Spriegels 17. Die Spriegel eines Verdecks bilden die den äußeren Verdeckbezug 21 tragende Vorrichtung, und der äußere Verdeckbezug 21 wird an den Spriegeln 17 angelenkt. Dies geschieht beim Stand der Technik unmittelbar dadurch, daß streifenartige, sogenannte Spriegelanbindungen mit dem äußeren Verdeckbezug 21 fest verbunden, insbesondere vernäht oder verklebt sind und auf der inneren bzw. auf der Unterseite an den Spriegeln angebracht wird.

Beim dargestellten Ausführungsbeispiel ist die Anordnung so getroffen, daß mit 24 bezeichnete Spriegelanbindungen, die die Form von Fahnen oder Leisten aufweisen, einstückig-stoffschlüssig mit der Dämmung 22 ausgebildet sind. Dies geschieht dadurch, daß die Gießform, in der die Dämmschicht 22 mit dem äußeren Verdeckbezug 21 verbunden wird, diese leisten- oder fahnenartigen Abschnitte bereits mit berücksichtigt. Die Spriegelanbindungen 24, die von der Dämmschicht 22 abstehen, sind relativ weich und flexibel (ein günstiger Härtegrad für die Dämmung 22 und somit auch für die Spriegelanbindungen 24 sind ca. 40 Shore D). Folglich lassen sich die Spriegelanbindungen an die äußere Oberfläche der Spriegel 17 anschmiegen. Gesichert werden sie zum Beispiel mit Hilfe von Schrauben 25 und geeigneter Unterlegscheiben 26. Selbstverständlich kommen auch andere, dem Fachmann geläufige Befestigungsmittel in Frage.

Gegenüber Fig. 2 ist Fig. 4 außerdem um die Darstellung eines Verdeck-Himmels 27 und dessen Anbindung an Spriegel 17 vervollständigt. Bei diesem Ausführungsbeispiel ist die zum äußeren Verdeckstoff 21 weisende Innenfläche 27 mit quer zur Fahrzeuglängsachse verlaufenden Streifen der Breite B einer Gießharzschicht 34 ausgerüstet, die die gleiche Konsistenz aufweist wie die Gießharzschicht 34 für die Dämmung 22.

Mit der Gießharzschicht 34 sind ineinander gegenüberliegende beabstandeter Anordnung zwei Leisten, Lappen oder mehrere in Längsrichtung des Spriegels aufeinander folgende Zungen 29 und 30 ausgebildet, die auf der einen Seite die Oberfläche des Spriegels 17 und auf der gegenüberliegenden Seite die Außenfläche der Spriegelanordnung 24 des äußeren Verdeckbezuges 21 außen umgreifen können. Beim dargestellten Ausführungsbeispiel erfolgt die Befestigung der Elemente am Spriegel 17 mit derselben Schraube 25 und der Unterlegscheibe 26.

Wenn man erreichen will, daß die Spriegelanbindungen 29 und 30, die dem Verdeck-Himmel 27 zugeordnet sind, eine höhere Steifigkeit und Härte aufweisen, beispielsweise zu dem Zweck, etwa klammerartig an Spriegel 17 und/oder Außenseite der Spriegelanbindung 24 angreifen zu können, stellt man bezüglich des Verdeck-Himmels 27 den Werkstoff der Gießharzschicht 34 härter und also weniger gummiartig-weich ein.

Zum besseren Verständnis der Fig. 4 sei noch darauf hingewiesen, daß sie versetzte Teilschnitte in sich vereinigt; die Befestigungszonen, also die Schrauben 25 und 38 liegen tatsächlich senkrecht zur Zeichenebene zueinander versetzt.

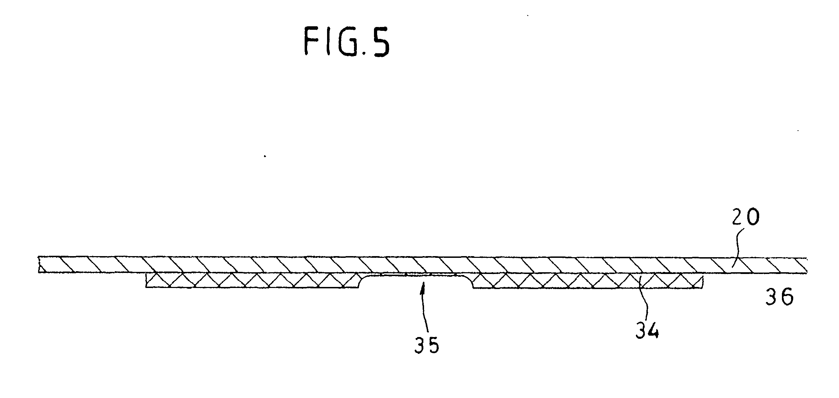

Fig. 5 veranschaulicht eine an einem Verdeckelement, z.B. einem Spanngurt 20, angeordnete Gießharzschicht 34 mit einer in der Schichtdicke deutlich reduzierten Zone 35, die dazu vorgesehen ist, in dem von ihr bestimmten Bereich das entsprechende Verdeckelement biegeweicher bzw. faltwilliger zu gestalten. Somit dient die Schwächungszone 35 zur gezielten Definition einer Falt- bzw. Knicklinie. Die symbolhaften Linien 39 in Fig. 1 veranschaulichen, an welchen Stellen bezüglich der Spanngurte 20 solche Sollfaltstellen angeordnet sein können; tatsächlich richten sich die Zonen natürlich nach der spezifischen Verdeckkonstruktion.

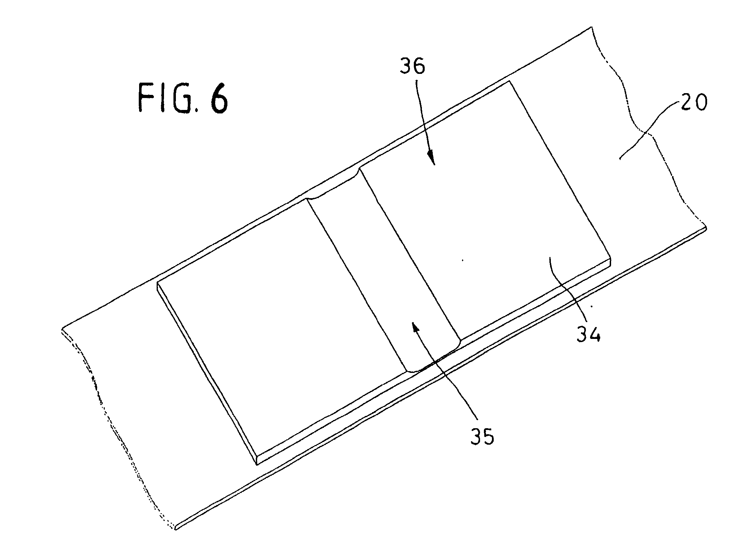

Fig.6 veranschaulicht die Anordnung nach Fig. 5 in einer schaubildlichen Aufsicht auf einen Spanngurt 20 und läßt ferner erkennen, daß die hier der Polsterung dienende Gießharzschicht 34 großflächig ist, indem sie sich bis auf schmale Randpartien über die gesamte Breite des Spanngurtes 20 hinwegerstreckt.

Anstatt Schwächungszonen 35 in die Gießharzschicht 34 einzuarbeiten, kann man zur gezielten Anordnung von Falt- oder Knickstellen in den entsprechenden Bereichen die Gießharzschicht auch unterbrechen bzw. nicht auftragen. Dies ist bezüglich des Verdeckbezugs 21 in Fig. 1 mit in den Seitenteilen 11 und 12 angeordneten linienhaften Zonen 23 so vorgesehen.

Im übrigen ist es vorteilhaft, die Spanngurte über ihre Länge hinweg mit einer Polsterung 36 auszurüsten, weil auf diese Weise die Geräuschentwicklung vermindert wird, die durch das "Flattern" entsteht, das vom Aneinanderschlagen von Spanngurt 20 und Verdeckbezug 21 herrührt.

Zur weitergehenden Erläuterung des in Fig. 1 dargestellten Verdecks 10 sei noch erwähnt, daß moderne Verdeckstoffe für den äußeren Verdeckbezug dreischichtig ausgebildet sind mit einem Obergewebe aus Polyacryl, einer Zwischenschicht aus synthetischem Kautschuk auf PUR-Basis oder auf Butylbasis sowie einem inneren Untergewebe, welches z.B. aus Polyester oder einem Mischgewebe von Baumwolle und Polyester besteht. Wesentlich ist, daß die aus synthetischem Kunststoff bestehende Schicht gas- und wasserundurchlässig ist, das Verdeck also vollständig dichtet und besonders zweckmäßig im Zusammenhang mit der Dämmung 22 ist es, daß die innere Verdeckstoffschicht von einem Gewebe ausgebildet ist.

In Fig. 1 ist im Dachbereich 13 des Verdecks 10 mit schraffierten Linien und in den Seitenteilen 11 mit kreuzschraffiertem Muster angedeutet, wo auf der Innenseite des äußeren Verdeckbezugs 21 Dämmschichten angebracht sind.

Sowohl die Dämmschicht 22 als auch die Polsterschicht 36 der Spanngurte 20 besteht aus einem gießfähigen Kunststoffmaterial, insbesondere aus einem Zweikomponenten-PUR-Kunststoff, der unter hohem Druck von 140 bis 150 bar in einer Gießform, in die die entsprechende(n) Verdeckstoffpartie(n) eingelegt werden, aufgegossen wird. Da die innere Fläche 21 a des äußeren Verdeckbezugs 21 wie auch der Spanngurt 20 üblicherweise und vorzugsweise aus einem Gewebe gebildet sind, läuft das zunächst noch flüssige Kunststoffmaterial in die Poren des Gewebes ein und kann sich dort formschlüssig verkrallen, sobald es aufgeschäumt ist.

Die Schichtdicke D der Dämmschicht 22 beträgt in der praktischen Ausführung in der Regel wenigstens 2 mm bis ca. 8 mm, je nach den speziellen Anforderungen.

Wesentlich ist es, daß das Kunststoffmaterial, aus dem die Dämmschicht 22 gebildet ist, und somit die Dämmschicht 22 selbst ohne besondere Verbindungsmittel am Spanngurt 20 bzw. an der inneren Oberfläche 21 a des äußeren Verdeckbezuges 21 fest haftet.

## Patentansprüche

1. Klapp- bzw. Faltverdeck (10) für Fahrzeuge wie Cabriolets mit Außenbezug (21) und Spanngurten (20) und mit einem am Fahrzeug angelenkten Verdeckgestänge mit Spriegeln (17), an denen je wenigstens ein Verdeckelement wie Außenbezug (21), Spanngurt (20) oder Innenbezug (27) mittels Anbindungselementen (24, 29, 30) befestigt ist, wobei die Spanngurte (20) zwischen Außenbezug (21) und Spriegel (17) verlaufen, **dadurch gekennzeichnet, dass** die Spanngurte (20) auf ihren dem Außenbezug (21) zugekehrten Flächen zumindest im Querungsbereich der Spriegel (17) mit einer unmittelbar an den Spanngurten (20) haftenden Polsterschicht (36) ausgerüstet sind.

2. Verdeck nach Anspruch 1, **dadurch gekennzeichnet, dass** die Polsterschicht (36) auf die Spanngurte (20) als Gießharzschicht (34) aus einem schäumbaren Kunststoff aufgegossen ist, welche nach dem Ausschäumen mit dem Spanngurt (20) eine feste Verbindung eingeht.

3. Verdeck nach Anspruch 1 oder 2, **dadurch gekennzeichnet, dass** der Außenbezug (21) auf seiner zum Fahrzeuginnenraum weisenden Innenseite (21a) mit einer Dämmung (22) versehen ist, die im Überdeckungsbereich mit dem Spanngurt (20) eine um dessen Dicke zuzüglich der Dicke (d) seiner Polsterschicht (36) verminderte Dicke aufweist.

4. Verdeck nach Anspruch 1 oder 2, **dadurch gekennzeichnet, dass** der Außenbezug (21) auf seiner zum Fahrzeuginnenraum weisenden Innenseite mit einer Dämmung (22) versehen ist und dass die Dicke des Spanngurtes (20) zuzüglich der Dicke (d) der Polsterschicht (36) im wesentlichen gleich der Dicke (D) der Dämmung (22) ist, wobei die Dämmung (22) nur bis zum Spanngurt (20) reicht, den und dessen Polsterung (36) allein der Außenbezug (21) überfängt.

5. Verdeck nach einem der Ansprüche 2 bis 4, **dadurch gekennzeichnet, dass** die Gießharzschichten (34) für die Polsterung (36) und/oder die Dämmung (22) aus einem unter Hochdruck aufgegossenen Kunststoff auf insbesondere PUR-Basis gebildet sind.

6. Verdeck nach Anspruch 5, **gekennzeichnet durch** eine Härte von etwa 40 Shore D des PUR-Kunststoffs und ein Mischungsverhältnis des Zwei-Komponenten-Kunststoffs von Polyol:Isocyanat von etwa 100:38 Gewichtsanteilen.

7. Verdeck nach einem der Ansprüche 2 bis 6, **gekennzeichnet durch** eine Schichtdicke der Gießharzschicht von etwa 2 bis 8 mm.

8. Verdeck nach einem der Ansprüche 2 bis 7, **dadurch gekennzeichnet, dass** die Spanngurte (20) im wesentlichen über ihre Länge hinweg auf ihren zum Außenbezug (21) weisenden Flächen mit der Gießharzschicht (34) im wesentlichen vollflächig überschäumt sind.

9. Verdeck nach einem der Ansprüche 2 bis 8, **dadurch gekennzeichnet, dass** die Gießharzschicht (34) zur Bildung von Sollfalt- bzw. Knickzonen (35) zumindest bereichsweise unterbrochen oder in ihrer Schichtdicke (D) vermindert ist.

## Claims

1. Collapsible and/or folding hood (10) for vehicles such as cabriolets comprising outer cover (21) and tension straps (20) and comprising a hood frame assembly coupled to the vehicle and having bows (17), to each of which at least one hood element such as outer cover (21), tension strap (20) or inner cover (27) is fastened by means of link elements (24, 29, 30), wherein the tension straps (20) extend between outer cover (21) and bow (17), **characterized in that** the tension straps (20) on their surfaces facing the outer cover (21) are equipped at least in the crossing region of the bows (17) with a layer of padding (36) adhering directly to the tension straps (20).

2. Hood according to claim 1, **characterized in that** the padding layer (36) is cast onto the tension straps (20) as a casting resin layer (34) of an expandable resin, which after expansion enters into a permanent combination with the tension strap (20).

3. Hood according to claim 1 or 2, **characterized in that** the outer cover (21) on its inner side (21a) directed towards the vehicle interior is provided with insulation (22), which in the region of overlap with the tension strap (20) has a thickness reduced by the thickness of the tension strap plus the thickness (d) of its padding layer (36) .

4. Hood according to claim 1 or 2, **characterized in that** the outer cover (21) on its inner side directed towards the vehicle interior is provided with insulation (22) and that the thickness of the tension strap (20) plus the thickness (d) of the padding layer (36) substantially equals the thickness (D) of the insulation (22), wherein the insulation (22) extends only as far as the tension strap (20), the latter and its padding (36) being overlapped solely by the outer cover (21).

5. Hood according to one of claims 2 to 4, **characterized in that** the casting resin layers (34) for the padding (36) and/or the insulation (22) are formed from an in particular PUR-based resin, which is cast on under high pressure.

6. Hood according to claim 5, **characterized by** a hardness of ca. 40 Shore D of the PUR resin and a mixing ratio of the two-component resin of polyol:isocyanate of ca. 100:38 % by weight.

7. Hood according to one of claims 2 to 6, **characterized by** a layer thickness of the casting resin layer of ca. 2 to 8 mm.

8. Hood according to one of claims 2 to 7, **characterized in that** the casting resin layer (34) is expanded over substantially the entire surface and substantially over the length of the tension straps (20) on their surfaces directed towards the outer cover (21).

9. Hood according to one of claims 2 to 8, **characterized in that** at least in sections the casting resin layer (34) is interrupted or its layer thickness (D) is reduced in order to form predetermined folding and/or bending zones (35).

## Revendications

1. Capote escamotable ou pliante (10) pour des véhicules tels que des cabriolets, comportant un revêtement extérieur (21) et des sangles tendeuses (20), et avec une tringlerie de capote, articulée sur le véhicule, munie d'arceaux (17), auxquels sont respectivement fixés, à l'aide d'éléments de raccordement (24, 29, 30), au moins un élément de capote, tel que le revêtement extérieur (21), la sangle tendeuse (20) ou le revêtement intérieur (27), les sangles tendeuses (20) s'étendant entre le revêtement extérieur (21) et les arceaux (17), **caractérisée en ce que** les sangles tendeuses (20) sont munies, sur leurs faces tournées vers le revêtement extérieur (21), au moins dans la zone de traversée des arceaux (17), d'une couche de rembourrage (36) adhérant directement aux sangles tendeuses (20).

2. Capote selon la revendication 1, **caractérisée en ce que** la couche de rembourrage (36) est rapportée par coulée sur les sangles tendeuses (20), sous la forme d'une couche de résine coulée (34) en un matériau synthétique moussable, qui provoque une liaison ferme à la sangle tendeuse (20), après avoir procédé au moussage.

3. Capote selon la revendication 1 ou 2, **caractérisée en ce que** le revêtement extérieur (21) est muni, sur sa face intérieure (21a), tournée vers l'habitacle de véhicule, d'un isolement (22) présentant, dans la zone de recouvrement avec la sangle tendeuse (20), une épaisseur diminuée de la valeur de son épaisseur, plus l'épaisseur (d) de sa couche de rembourrage (36).

4. Capote selon la revendication 1 ou 2, **caractérisée en ce que** le revêtement extérieur (21) est muni, sur sa face intérieure tournée vers l'habitacle de véhicule, d'un isolement (22) et **en ce que** l'épaisseur de la sangle tendeuse (20), plus l'épaisseur (d) de la couche de rembourrage (36), est sensiblement égale à l'épaisseur (D) de l'isolement (22), l'isolement (22) n'arrivant que jusqu'à la sangle tendeuse (20), le revêtement extérieur (21) seul passant au-dessus de celle-ci et de son rembourrage (36).

5. Capote selon l'une des revendications 2 à 4, **caractérisée en ce que** les couches de résine coulée (34) du rembourrage (36) et/ou l'isolement (22) sont formés d'une matière synthétique coulée sous haute pression, en particulier à base de PUR.

6. Capote selon la revendication 5, **caractérisée par** une dureté d'environ 40 Shore D pour la matière synthétique PUR, et par un rapport de mélange de la matière synthétique à deux composants d'environ 100:38 du polyol:isocyanate.

7. Capote selon l'une des revendications 1 à 6, **caractérisée par** une épaisseur de couche d'environ 2 à 8 mm pour la couche de résine coulée.

8. Capote selon l'une des revendications 2 à 7, **caractérisée en ce que** les sangles tendeuses (20) sont rendues alvéolaires en surface pratiquement sur toute leur surface, pratiquement sur toute leur longueur, sur leurs faces tournées vers le revêtement extérieur (21), avec la couche en résine coulée (34).

9. Capote selon l'une des revendications 2 à 8, **caractérisée en ce que** la couche de résine coulée (34) est au moins partiellement interrompue, ou subit une diminution de son épaisseur de couche (D), dans le but de former des zones destinées au pliage, respectivement à la flexion (35).
